(19) Europäisches Patentamt
European Patent Office
Office européen des brevets

(11) **EP 4 516 636 A1**

(12) **EUROPEAN PATENT APPLICATION**
published in accordance with Art. 153(4) EPC

(43) Date of publication:
**05.03.2025 Bulletin 2025/10**

(21) Application number: **22940126.0**

(22) Date of filing: **27.04.2022**

(51) International Patent Classification (IPC):
**B62D 5/04** (2006.01)      **G01M 17/06** (2006.01)

(52) Cooperative Patent Classification (CPC):
**G01M 17/06; B62D 5/04**

(86) International application number:
**PCT/JP2022/019028**

(87) International publication number:
**WO 2023/209846 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **NATSUHARA, Hiroya
Tokyo 100-8310 (JP)**
• **ORII, Masahiko
Tokyo 100-8310 (JP)**
• **KEZOBO, Isao
Tokyo 100-8310 (JP)**
• **HASHIMOTO, Akihiko
Tokyo 100-8310 (JP)**

(74) Representative: **Hoffmann Eitle
Patent- und Rechtsanwälte PartmbB
Arabellastraße 30
81925 München (DE)**

(54) **INPUT/OUTPUT DEVICE AND STEERING MEASUREMENT DEVICE**

(57)      An input/output device includes a communication receiving unit connected to a control device controlling a rotary machine of an electric power steering device and receives response data of the electric power steering device, which is detected during steering manipulation based on a target steering waveform which is a target value of a steering waveform representing a temporal change in the steering manipulation, from the control device, a recommended-steering-waveform generation unit generating a recommended steering waveform, which is recommended as the target steering waveform, on the basis of the response data, and an output unit outputting the recommended steering waveform.

FIG. 3

EP 4 516 636 A1

# EP 4 516 636 A1

**Description**

[Technical Field]

The present disclosure relates to an input/output device and a steering measurement device.

[Background Art]

Patent Document 1 discloses a test device for an electric power steering device. This test device includes an input/output device and a control device. The input/output device identifies steering characteristics. The control device controls a rotary machine included in the electric power steering device. The input/output device sends a vibration instruction to the control device, the control device causes the rotary machine to vibrate, and a response to the vibration is detected by a rotation detector, a torque detector, and a microphone. The above-described response is transmitted to the input/output device, and the input/output device identifies mechanical characteristics, frequency characteristics, and noise characteristics of the steering on the basis of the vibration instruction and the response.

[Citation List]

[Patent Document]

[Patent Document 1]
Japanese Patent No. 6129409

[Summary of Invention]

[PROBLEM TO BE SOLVED BY THE INVENTION]]

As one of tests for an electric power steering device, there is a steering test. In the steering test, a human or a robot manipulates (steers) a steering wheel on the basis of a predetermined steering waveform (a temporal change in angle or angular velocity). When the steering test is conducted, it is possible to evaluate the electric power steering device in an environment similar to actual use conditions. As the steering conditions, there are various conditions with different angles or angular velocities for moving the steering, or the like. Also, as evaluation items in the steering test, there are various items such as an evaluation related to frequency characteristics (a gain, a stability margin, and the like of a transfer function), an evaluation of steering feel, and an evaluation of vibration/noise. Presence or absence of occurrence of a problem in each of the evaluation items may differ according to the steering conditions. Therefore, it is required to conduct the steering test under steering conditions in which items to be evaluated are taken into consideration.
In the above-described test, if a requirement for a certain evaluation item has not been satisfied, generally, a series of operations in which the electric power steering device is adjusted and then retested and reevaluated are performed. At the time of the re-evaluation, the same steering manipulation is required in both the steering test before the adjustment and the steering test after the adjustment. When the adjustment operation is performed a plurality of times and the evaluation is performed a plurality of times, it is required to perform the same steering manipulation with high reproducibility in each time of the steering tests.
However, if a steering waveform that serves as a reference is not shown, it is difficult for a human to perform the same steering manipulation every time, that is, to improve reproducibility of the steering manipulation. If the steering manipulation is different for each test, it is difficult to accurately evaluate the steering test. Also, there are cases in which the steering test is conducted using a robot for steering manipulation for the purpose of improving reproducibility of the steering manipulation or the like, but in that case, it is necessary to define a steering command value to be given to the robot. In order for the robot to reproduce the steering manipulation equivalent to that in the steering test conducted before introduction of the robot, it is necessary to define an appropriate steering command, but time and effort are required to do so.
The present disclosure has been made to solve the above-described problems, and an objective thereof is to provide an input/output device and a steering measurement device that is capable of conducting a steering test under appropriate steering conditions.

[MEANS TO SOLVE THE PROBLEM]

An input/output device according to the present disclosure includes a communication receiving unit connected to a control device controlling a rotary machine of an electric power steering device and receives response data of the electric power steering device, which is detected during steering manipulation based on a target steering waveform which is a target value of a steering waveform representing a temporal change in the steering manipulation, from the control device, a recommended-steering-waveform generation unit generating a recommended steering waveform, which is recommended as the target steering waveform, on the basis of the response data, and an output unit outputting the recommended steering waveform.

[EFFECTS OF THE INVENTION]

According to the present disclosure, it is possible to provide an input/output device and a steering measurement device that is capable of conducting a steering test under appropriate steering conditions.

[Brief Description of Drawings]

FIG. 1 is a diagram showing an input/output device and an electric power steering device according to embodiment 1.
FIG. 2 is a block diagram showing a control device according to embodiment 1.
FIG. 3 is a block diagram showing the input/output device according to embodiment 1.
FIG. 4 is a block diagram showing a recommended-steering-waveform generation unit according to embodiment 1.
FIG. 5 is a diagram showing an example of response data according to embodiment 1.
FIG. 6 is a block diagram showing a generation unit according to embodiment 1.
FIG. 7 is a diagram showing an example of a recommended steering waveform according to embodiment 1.
FIG. 8 is a block diagram showing an input/output device according to embodiment 2.
FIG. 9 is a diagram showing an example of a steering waveform displayed by a display unit according to embodiment 2.
FIG. 10 is a diagram showing an example of an instantaneous value of the steering waveform displayed by the display unit according to embodiment 2.
FIG. 11 is a diagram showing an example of response data including vibration.
FIG. 12 is a block diagram showing a generation unit according to embodiment 3.
FIG. 13 is a diagram showing an example of a recommended steering waveform according to embodiment 3, which does not include reverse steering manipulation.
FIG. 14 is a diagram showing an example of the recommended steering waveform according to embodiment 3, which includes reverse steering manipulation.

[Description of Embodiments]

Embodiment 1.

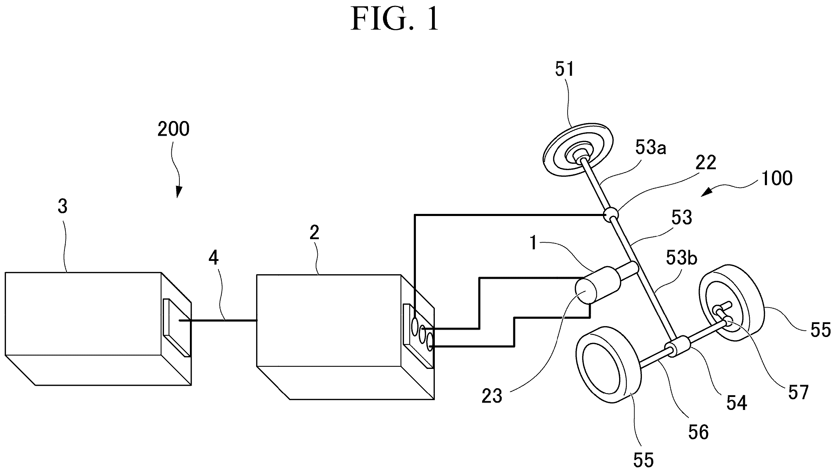

FIG. 1 is a diagram showing an input/output device 3 and an electric power steering device 100 according to embodiment 1. As shown in FIG. 1, the electric power steering device 100 according to the present embodiment includes a steering wheel 51, a steering shaft 53, a rack and pinion gear 54, a pair of wheels 55, a tie rod 56, a rotary machine 1, a control device 2, a torque detector 22, and a rotation detector 23. The electric power steering device 100 is mounted on a vehicle. The input/output device 3 is connected to the control device 2 via a communication network 4 when generation of a recommended steering waveform (details will be described later) is performed. Note that, in the present specification, the input/output device 3 and the control device 2 may be collectively referred to as a "steering measurement device 200".

As the communication network 4, for example, a controller area network (CAN) (registered trademark), FlexRay (registered trademark), Ethernet (registered trademark), or the like may be used. According to types of the communication network 4 used, a cable for the communication network 4 may be wired inside the vehicle.

A steering torque is applied to the steering wheel 51 by a driver (not shown) operating a handle (not shown) or the like. The steering shaft 53 has an input shaft 53a connected to the steering wheel 51, and an output shaft 53b connected to the rack and pinion gear 54. The input shaft 53a and the output shaft 53b are connected to each other by a torsion bar (not shown). The torsion bar is disposed inside the torque detector 22 and penetrates the torque detector 22 in an axial direction. Note that, in the present specification, the steering wheel 51, the steering shaft 53, and the torsion bar may be collectively referred to as a "steering".

The steering torque applied to the steering wheel 51 is transmitted to a rack (not shown) in the rack and pinion gear 54 via the torsion bar in the torque detector 22, the steering shaft 53, and the rack and pinion gear 54. The rack and the wheels 55 are connected via the tie rod 56 and a knuckle arm 57. Therefore, when the steering torque due to the handle operation is transmitted to the rack, the tie rod 56 pushes the knuckle arm 57 on one wheel 55, and the tie rod 56 pulls the knuckle arm 57 on the other wheel 55. Thereby, a steering angle is applied to the wheels 55, and the wheels 55 are steered.

A voltage is applied to the rotary machine 1 by the control device 2. The rotary machine 1 generates a torque according to the applied voltage. The torque (output torque) generated from the rotary machine 1 is transmitted to the steering shaft 53. The output torque of the rotary machine 1 functions as a steering assist force and reduces the steering torque that the driver should apply during steering manipulation. The rotary machine 1 may have, for example, an AC motor such as a permanent magnet synchronous motor or an induction motor, a DC motor, or the like.

The torque detector 22 detects the steering torque applied to the steering wheel 51 by the driver. More specifically, when the steering torque is applied, a torsion substantially proportional to the steering torque occurs in the torsion bar. The torque detector 22 detects a direction and an angle of the torsion of the torsion bar. The torque detector 22 converts the detected torsion angle into a steering torque signal and outputs the steering torque signal to the control device 2 (a power feeding unit 24 and a communication transmission unit 25).

The rotation detector 23 is attached to a rotating shaft of the rotary machine 1. The rotation detector 23 detects an angular velocity of the rotating shaft. The rotation detector 23 converts the detected angular velocity into an angular velocity signal, and outputs the angular velocity signal to the control device 2 (the power feeding unit 24 and the communication transmission unit 25).

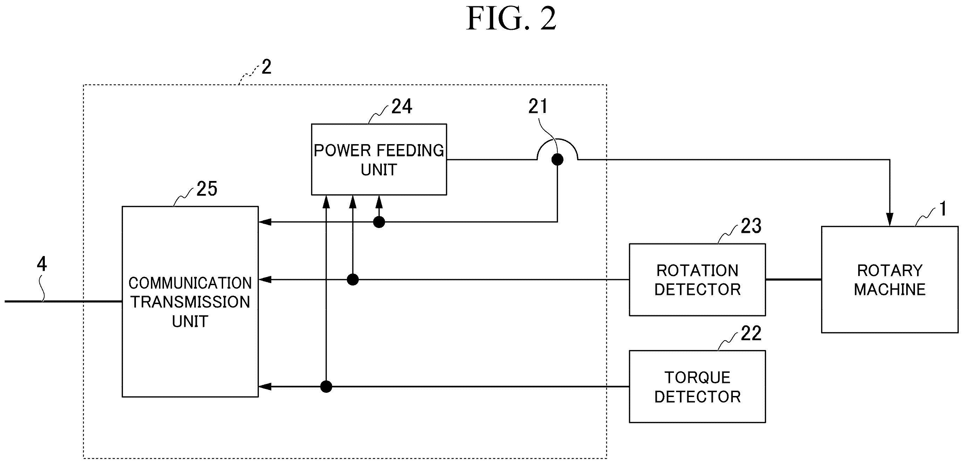

FIG. 2 is a block diagram showing an internal configuration of the control device 2 according to the present embodiment. As shown in FIG. 2, the control device 2 includes a current detector 21, the power feeding unit 24, and the communication transmission unit 25.

The current detector 21 detects a current flowing through the rotary machine 1 when the power feeding unit 24 applies a voltage to the rotary machine 1. The current detector 21 converts the detected current into a current signal and outputs the current signal to the power feeding unit 24 and the communication transmission unit 25.

The power feeding unit 24 generates a voltage applied to the rotary machine 1 on the basis of the steering torque signal output by the torque detector 22 and the angular velocity signal output by the rotation detector 23. More specifically, the power feeding unit 24 according to the present embodiment determines a current command corresponding to an output torque output by the rotary machine 1 on the basis of the steering torque signal and the angular velocity signal. In order to cause the rotary machine 1 to generate the output torque, the power feeding unit 24 generates a voltage command for controlling a current flowing through the rotary machine 1 on the basis of the current command and the current signal that is output by the current detector 21. On the basis of the voltage command, the rotary machine 1 uses a drive circuit (not shown) to apply a voltage to the rotary machine 1 to cause the current to flow therethrough.

The communication transmission unit 25 transmits the steering torque signal output by the torque detector 22, the angular velocity signal output by the rotation detector 23, and the current signal output by the current detector 21 to the input/output device 3 (communication receiving unit 31). Note that, in the present specification, the steering torque signal, the angular velocity signal, and the current signal may be collectively referred to as "response data of the electric power steering device 100" or simply as "response data".

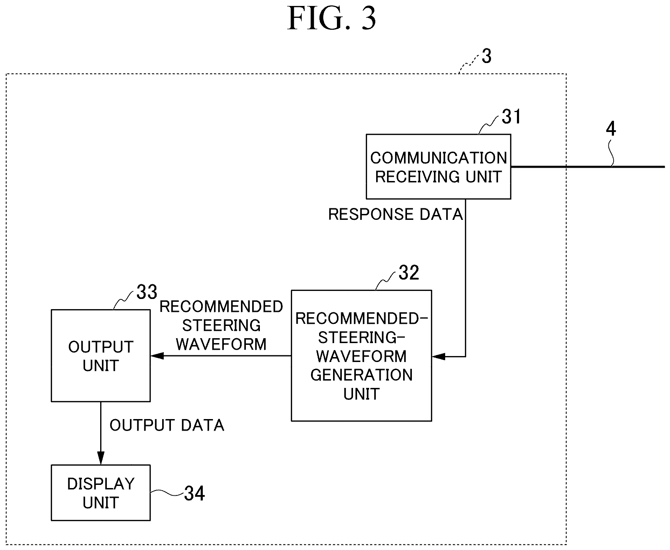

FIG. 3 is a block diagram showing an internal configuration of the input/output device 3 according to the present embodiment. As shown in FIG. 3, the input/output device 3 includes the communication receiving unit 31, a recommended-steering-waveform generation unit 32, an output unit 33, and a display unit 34. As hardware constituting the input/output device 3, a communication terminal such as, for example, a tablet computer or a notebook personal computer may be used.

The input/output device 3 performs processing of various types including generation of a recommended steering waveform on the basis of the response data received by the communication receiving unit 31. The communication receiving unit 31 receives the response data transmitted by the communication transmission unit 25. The communication receiving unit 31 outputs the received response data to the recommended-steering-waveform generation unit 32.

In the present specification, a waveform representing a temporal change in steering manipulation in a steering test of the electric power steering device 100 is referred to as a "steering waveform W". For example, a steering waveform W is a waveform representing a temporal change in an angle of the steering wheel 51. The steering waveform W may be a waveform representing a temporal change in an angular velocity of the steering wheel 51. Alternatively, the steering waveform W may be a waveform representing a temporal change in an angle of the rotary machine 1. The steering waveform W may be a waveform representing a temporal change in an angular velocity of the rotary machine 1. Also, a target value of the steering waveform W in the steering test is referred to as a "target steering waveform Wtar". More specifically, the target steering waveform Wtar is a waveform that represents a temporal change in an angle or angular velocity that the examiner should apply to the steering wheel 51 in the steering test. Alternatively, the target steering waveform Wtar is a waveform that represents a temporal change in the angle or angular velocity that should be generated in the rotary machine 1 in the steering test. Further, the steering waveform W recommended as the target steering waveform Wtar in the steering test is referred to as a "recommended steering waveform Wrec".

The recommended-steering-waveform generation unit 32 generates the recommended steering waveform Wrec on the basis of the response data output by the communication receiving unit 31. The recommended-steering-waveform generation unit 32 outputs the generated recommended steering waveform Wrec to the output unit 33. The output unit 33 outputs the recommended steering waveform Wrec to the display unit 34 as output data. The display unit 34 displays the output data output by the output unit 33. When a tablet computer or a notebook personal computer is employed as hardware constituting the input/output device 3, it is possible to cause a display thereof to assume a function of the display unit 34.

Note that, although not shown, a configuration in which the output unit 33 does not output the output data to the display unit 34 may be employed. For example, the output unit 33 may be configured to output the recommended steering waveform Wrec as text data or a CSV file. **In** addition, a configuration (output format) of the output unit 33 may be changed as appropriate as long as it is possible for a user to ascertain the output data, or it is possible to use the output data as a steering command value for a robot that steers the steering.

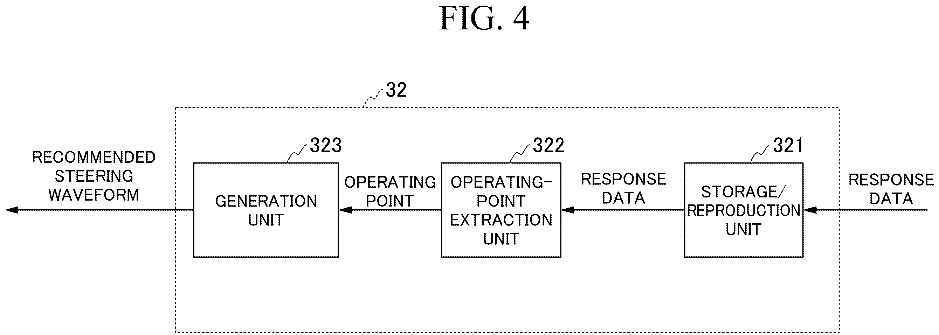

Hereinafter, generation of the recommended steering waveform Wrec by the recommended-steering-waveform generation unit 32 will be described in detail. As shown in FIG. 4, the recommended-steering-waveform generation unit 32 according to the present embodiment includes a storage/reproduction unit 321, an operating-point extraction unit 322, and a generation unit 323. The storage/reproduction unit 321 stores the response data and reproduces the stored response data. The operating-point extraction unit 322 extracts a quantity representing characteristics of the steering manipulation (the steering waveform W) from the response data as an operating point and digitizes the operating point. The generation unit 323 generates the recommended steering waveform Wrec using the operating point.

First, the storage/reproduction unit 321 will be described. Since the recommended-steering-waveform generation unit 32 has the storage/reproduction unit 321, it is possible to repeatedly generate the recommended steering waveform Wrec generated from the stored response data also in subsequent steering tests. Thereby, it is possible to improve reproducibility of the steering test. Which time period of the response data is stored/reproduced may be arbitrarily specified by the user or may be specified using an automatic determination device. The automatic determination device automatically determines a time period to be stored/reproduced from, for example, a magnitude of the response data value or presence or absence of vibration. Note that, a configuration of the storage/reproduction unit 321 may be changed as appropriate as long as it is possible for the recommended-steering-waveform generation unit 32 to repeatedly generate the recommended steering waveform Wrec. For example, the storage/reproduction unit 321 may be configured to store/reproduce the operating point, or may be configured to store/reproduce the recommended steering waveform Wrec.

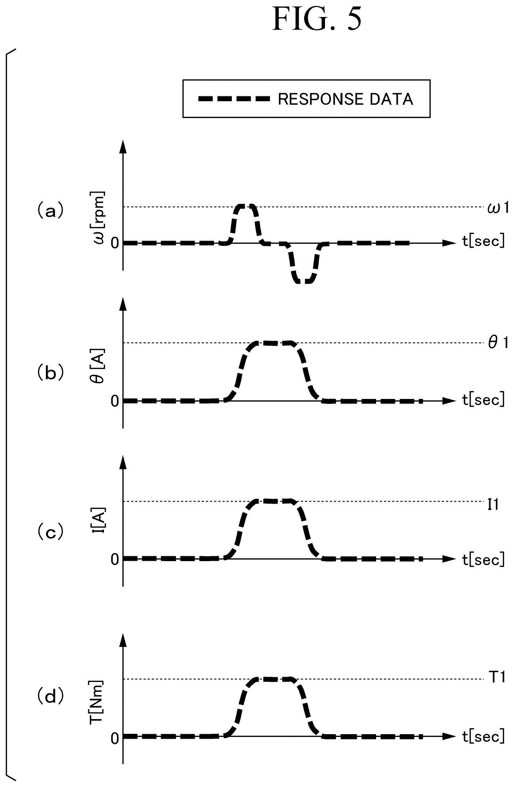

Next, the operating-point extraction unit 322 will be described. FIG. 5 is a diagram showing an example of response data according to the present embodiment. As described above, the response data includes an angular velocity $\omega$ (angular velocity signal) of the rotary machine, a detected current I (current signal), and a steering torque T (steering torque signal). Also, an angle $\theta$ obtained by integrating the angular velocity $\omega$ may also be regarded as one of the response data. The angle $\theta$ may be obtained via the communication network 4 without differentiating a value detected by the rotation detector 23. In generating the recommended steering waveform Wrec, only one of the angular velocity $\omega$, the angle $\theta$, the detected current I, and the steering torque T may be used, or a plurality of them may be used in combination.

The operating-point extraction unit 322 extracts an operating point (an operating point angular velocity $\omega 1$, an operating point angle $\theta 1$, an operating point detection current I1, or an operating point steering torque T1) from each of the angular velocity $\omega$, the angle $\theta$, the detected current I, and the steering torque T. The operating point angular velocity $\omega 1$ may be defined in various ways such as, for example, a maximum value of the angular velocity $\omega$, an average value of the angular velocity $\omega$, a maximum value of the angular velocity $\omega$ after low-pass processing, or a value of the angular velocity $\omega$ at a time that satisfies a certain condition. Similarly, various definitions may also be made for the operating point angle $\theta 1$, the operating point detection current I1, and the operating point steering torque T1. In the present embodiment, the operating point angular velocity $\omega 1$, the operating point angle $\theta 1$, the operating point detection current I1, and the operating point steering torque T1 are defined as a maximum value of the angular velocity $\omega$, a maximum value of the angle $\theta$, a maximum value of the detected current I, and a maximum value of the steering torque T, respectively. The operating-point extraction unit 322 outputs the extracted operating point to the generation unit 323 (multiplication unit 325).

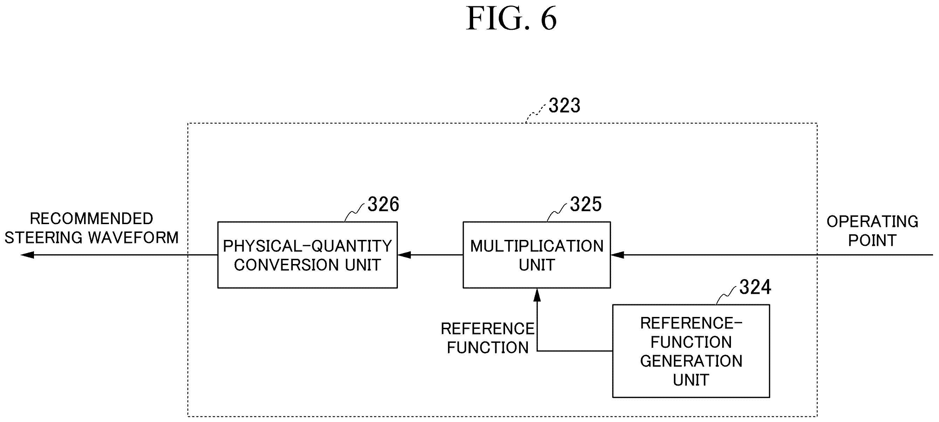

Next, the generation unit 323 will be described. FIG. 6 is a block diagram showing the generation unit 323 according to the present embodiment. The generation unit 323 according to the present embodiment includes a reference-function generation unit 324, a multiplication unit 325, and a physical-quantity conversion unit 326. The reference-function generation unit 324 generates a reference function. The reference-function generation unit 324 outputs the generated reference function to the multiplication unit 325. The multiplication unit 325 multiplies the reference function output by the reference-function generation unit 324 and the operating point output by the operating-point extraction unit 322. The multiplication unit 325 outputs the multiplication result to the physical-quantity conversion unit 326. The physical-quantity conversion unit 326 converts the output of the multiplication unit 325 to generate the recommended steering waveform Wrec.

The reference function generated by the reference-function generation unit 324 may be freely defined as long as a maximum value thereof is about 1. For example, a sine wave, a swept sine wave (sine sweep), a rectangular wave, a single pulse wave, a spline curve, or the like may be used as the reference function. Hereinafter, in the present embodiment, an example using a sine wave as the reference function will be introduced.

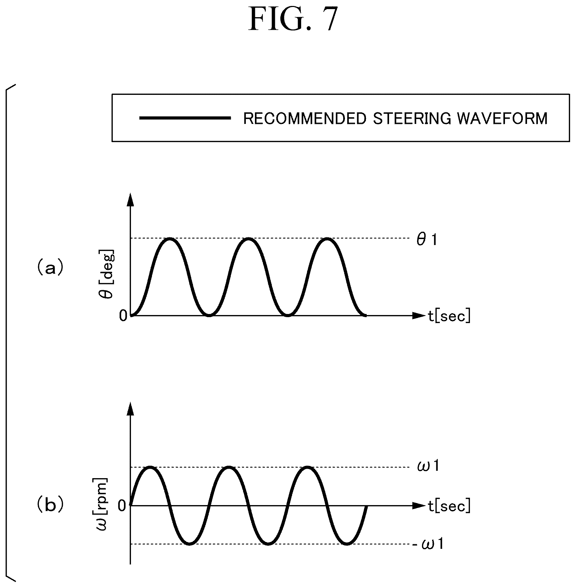

FIG. 7 is a diagram showing the recommended steering waveform Wrec according to the present embodiment. The recommended steering waveform Wrec may include only one of the angle $\theta$ and the angular velocity $\omega$ of the rotary

machine 1, or may include both of them. The graph (a) shown in FIG. 7 is the recommended steering waveform Wrec of the angle θ. This recommended steering waveform Wrec is capable of reproducing steering manipulation that includes the operating point angle θ1. It is possible to express this recommended steering waveform Wrec by the following expression (1).

[Math. 1]

$$\theta = \frac{\theta_1}{2} \times \left(1 - \cos\left(Ft\right)\right) \quad \cdots \quad (1)$$

In expression (1), F represents a steering angle frequency. The steering angle frequency F may be set freely, and may be, for example, about $0.2\,\pi$ to $10\,\pi$. In the example shown in FIG. 7, the steering angle frequency F is a fixed value, but the steering angle frequency F may be varied if a swept sine wave is used as the reference function, or the like. In the above expression (1), an initial phase and an offset value are set to satisfy an initial condition that the angle θ and the angular velocity ω are zero at a steering start time (t = 0).

The graph (b) shown in FIG. 7 is the recommended steering waveform Wrec of the angular velocity ω. The recommended steering waveform Wrec is capable of reproducing steering manipulation including the operating point angular velocity ω1. It is possible to express the recommended steering waveform Wrec by the following expression (2).

[Math. 2]

$$\omega = \omega_1 \times \sin\left(Ft\right) \quad \cdots \quad (2)$$

The physical-quantity conversion unit 326 receives a value output by the multiplication unit 325 as an input, and converts the input value so that the recommended steering waveform Wrec becomes a desired physical quantity. The physical-quantity conversion unit 326 outputs the converted value to the output unit 33. Note that, if the input operating point and the physical quantity of the recommended steering waveform Wrec match, the above-described conversion processing is not necessary. If the input operating point and the physical quantity of the recommended steering waveform Wrec do not match, the physical-quantity conversion unit 326 performs the above-described conversion processing. For example, since the angle θ and the angular velocity ω have a differential integral relationship, if either one of the recommended steering waveform Wrec of the angle θ and the recommended steering waveform Wrec of the angular velocity ω is determined, the physical-quantity conversion unit 326 performs differentiation or integration to determine the other physical quantity. When the angle θ is determined by integrating the angular velocity ω, an offset value that is an integral constant is required. In the present embodiment, it is possible to uniquely determine the offset value by setting the initial condition described above. Note that, depending on the operating point and the reference function, the waveform obtained by differentiating the recommended steering waveform Wrec of the angle θ that includes the operating point angle θ1 does not necessarily include the operating point angular velocity ω1, and similarly, the waveform obtained by integrating the recommended steering waveform Wrec of the angular velocity ω that includes the operating point angular velocity ω1 does not necessarily include the operating point angle θ1. Therefore, caution is required.

Also, the recommended-steering-waveform generation unit 32 may be configured to output the recommended steering waveform Wrec of the steering angle (an angle of the steering wheel 51) or the recommended steering waveform Wrec of the steering angular velocity (an angular velocity of the steering wheel 51). In this case, the physical-quantity conversion unit 326 is capable of generating the recommended steering waveform Wrec using the steering angle or the steering angular velocity as a physical quantity by performing processing of dividing the angle θ or the angular velocity ω by a gear ratio Gn.

Also, depending on types of sensors included in the motor (rotary machine 1), restrictions on communication performance, or the like, there are cases in which the angle θ and the angular velocity ω are not included in the response data. Even in such a case, it is possible to approximately generate the recommended steering waveforms Wrec of the angle θ and the angular velocity ω, for example, by using the detected current I and the steering torque T as the response data. When the detected current I and the steering torque T are used as the response data, since the operating point detection current I1 and the operating point steering torque T1 are extracted by the operating-point extraction unit 322, an output value of the multiplication unit 325 is based on those operating points I1 and T1. Hereinafter, processing of converting the output value of the multiplication unit 325 into the angle θ by the physical-quantity conversion unit 326 will be described. Assuming that it is possible to express a reaction force applied to the electric power steering device 100 by a simple spring model that is proportional to the angle θ, it is possible to approximate the angle θ by the following expression (3).

[Math. 3]

$$\theta = \frac{K_\mathrm{t} \times I + T/G_\mathrm{n}}{K_\mathrm{align}} \quad \cdots \quad (3)$$

In expression (3), Kt is a motor output coefficient, and Kalign is a reaction force spring coefficient. Also, a relationship between the detected current I and the steering torque T is approximately determined from a model of a controller included in the electric power steering device 100. Therefore, even if the response data includes only one of the detected current I and the steering torque T, it is possible to approximately determine the angle θ. Note that, in order to express the angle θ more accurately, the angle θ may be calculated using an expression of motion on which a viscosity term, an inertia term, and a friction term are reflected. Alternatively, a map that outputs the angle θ by using the detected current I or the steering torque T as an input may be defined, and the angle θ may be calculated using the map. When the physical-quantity conversion unit 326 performs the calculation as described above, it is possible to output the recommended steering waveform Wrec of the angle θ. Also, when the recommended steering waveform Wrec of the angle θ obtained by the above-described calculation is differentiated by the physical-quantity conversion unit 326, it is also possible to output the recommended steering waveform Wrec of the angular velocity ω.

Note that, in the above description, the conversion processing by the physical-quantity conversion unit 326 has been performed on the recommended steering waveform Wrec, but a configuration in which the physical-quantity conversion unit 326 performs the conversion on the response data or the operating point may also be employed.

Note that, the functions of the units 31 to 34 included in the input/output device 3 shown in FIG. 3 may be realized by a central processing unit (CPU) executing a program. Alternatively, it is also possible to realize the functions of the units 31 to 34 using hardware (circuit unit including a circuitry) such as a large scale integration (LSI), an application specific integrated circuit (ASIC), a field-programmable gate array (FPGA), and a graphics processing unit (GPU). Alternatively, it is also possible to realize the functions of the units 31 to 34 by software and hardware in cooperation.

As described above, the input/output device 3 according to the present embodiment includes the communication receiving unit 31 connected to the control device 2 controlling the rotary machine 1 of the electric power steering device 100 and receives the response data of the electric power steering device 100, which is detected during steering manipulation based on the target steering waveform Wtar which is a target value of the steering waveform W representing a temporal change in the steering manipulation, from the control device 2, the recommended-steering-waveform generation unit 32 generating the recommended steering waveform Wrec, which is recommended as the target steering waveform Wtar, on the basis of the response data, and the output unit 33 outputting the recommended steering waveform Wrec.

According to this configuration, the recommended steering waveform Wrec that should be applied during a steering test is output. Therefore, it is possible for even a user with little knowledge about a steering method to conduct the steering test under appropriate steering conditions by performing the steering manipulation while referring to the recommended steering waveform Wrec. Alternatively, when the output recommended steering waveform Wrec is used as a steering command value applied to the robot, it is possible to perform the steering test under appropriate steering conditions on the basis of the existing response data. Also, since the only sensors that the electric power steering device 100 should include are the current detector 21, the torque detector 22, and the rotation detector 23, it is possible to realize the configuration of the present embodiment at relatively low cost.

Also, the response data includes at least one of the steering torque T of the steering of the electric power steering device 100, the detected current I of the rotary machine 1, the angle θ of the rotary machine 1, and the angular velocity ω of the rotary machine 1. With this configuration, it is possible to output the recommended steering waveform Wrec by using at least one of the steering torque T, the detected current I, the angle θ, and the angular velocity ω.

Also, the recommended-steering-waveform generation unit 32 generates the recommended steering waveform Wrec so that it includes the operating point extracted from the response data and representing characteristics of the steering manipulation. With this configuration, it is easier to unify the operating points of the steering tests conducted a plurality of times, and it is easier to secure reproducibility of the steering tests.

Also, the steering measurement device 200 according to the present embodiment includes the above-described input/output device 3 and control device 2, in which, when the steering is steered, the control device 2 transmits a detected response of the electric power steering device 100 to the input/output device 3 as the response data. With this configuration, it is possible to perform generation of the recommended steering waveform Wrec and acquisition of the response data when the steering test is conducted on the basis of the recommended steering waveform Wrec by an integrated device.

Embodiment 2.

Next, embodiment 2 will be described, but a basic configuration is the same as that of embodiment 1. Therefore, description of the same components will be omitted, and only different points will be described.

The present embodiment differs from embodiment 1 in that an output unit 33 outputs both a recommended steering waveform Wrec and an actual steering waveform Wact that is obtained from response data.

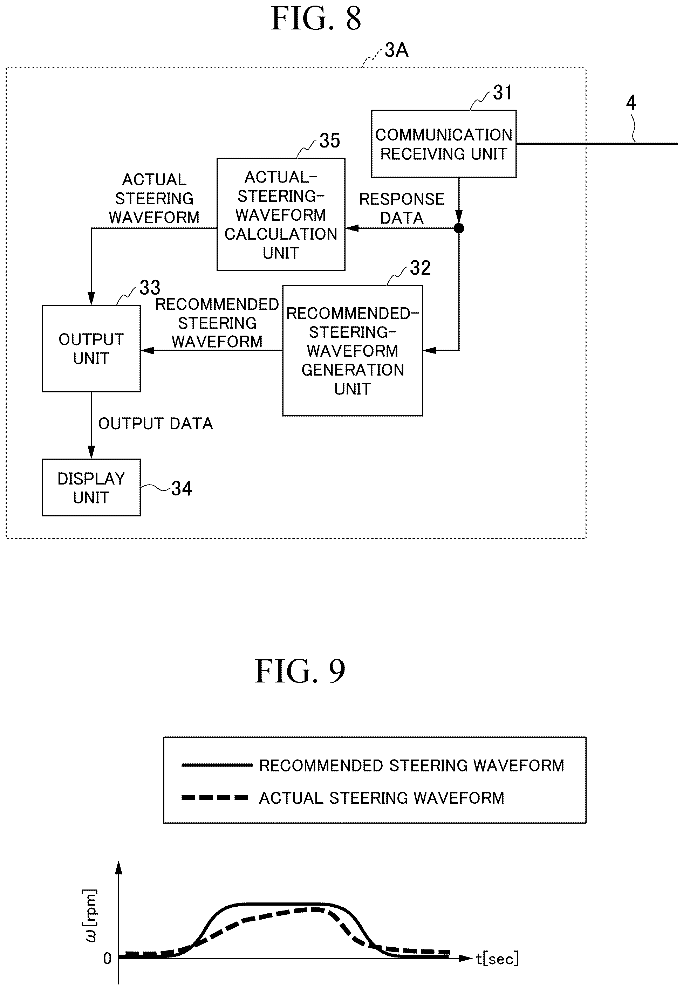

FIG. 8 is a block diagram showing an input/output device 3A according to the present embodiment. The input/output device 3A according to the present embodiment includes an actual-steering-waveform calculation unit 35. A communication receiving unit 31 outputs response data received from a communication transmission unit 25 to a recommended-steering-waveform generation unit 32 (multiplication unit 325) and the actual-steering-waveform calculation unit 35. The actual-steering-waveform calculation unit 35 generates the actual steering waveform Wact on the basis of the response data output by the communication receiving unit 31. The actual-steering-waveform calculation unit 35 outputs the generated actual steering waveform Wact to the output unit 33. The output unit 33 outputs both the recommended steering waveform Wrec output by the recommended-steering-waveform generation unit 32 (physical-quantity conversion unit 326) and the actual steering waveform Wact output by the actual-steering-waveform calculation unit 35 as output data to a display unit 34.

In the present specification, the "actual steering waveform Wact" means a steering waveform W representing a temporal change in actual steering manipulation performed during a steering test. More specifically, the actual steering waveform Wact is a waveform representing an actual temporal change in angle of a steering wheel 51 during steering manipulation, an actual temporal change in angular velocity of the steering wheel 51 during steering manipulation, an actual temporal change in angle $\theta$ of a rotary machine 1 during steering manipulation, or an actual temporal change in angular velocity $\omega$ of the rotary machine 1 during steering manipulation. A specific configuration of the actual-steering-waveform calculation unit 35 may be the same as the configuration of the physical-quantity conversion unit 326 described in the embodiment described above. Note that, if physical quantities of the response data and the actual steering waveform Wact match, conversion processing by the actual-steering-waveform calculation unit 35 is not necessary. If physical quantities of the response data and the actual steering waveform Wact do not match, the actual-steering-waveform calculation unit 35 performs the same conversion processing as the physical-quantity conversion unit 326.

FIG. 9 is a diagram showing a display example of the steering waveform W on the display unit 34 according to the present embodiment. In the example of FIG. 9, the recommended steering waveform Wrec and the actual steering waveform Wact are displayed to be superimposed on the time series graph. When the recommended steering waveform Wrec and the actual steering waveform Wact are displayed to be superimposed as described above, it is easier for a user to recognize a difference between the actual steering waveform Wact and the recommended steering waveform Wrec. Therefore, steering manipulation by the user and the recommended steering waveform Wrec are likely to come close to each other.

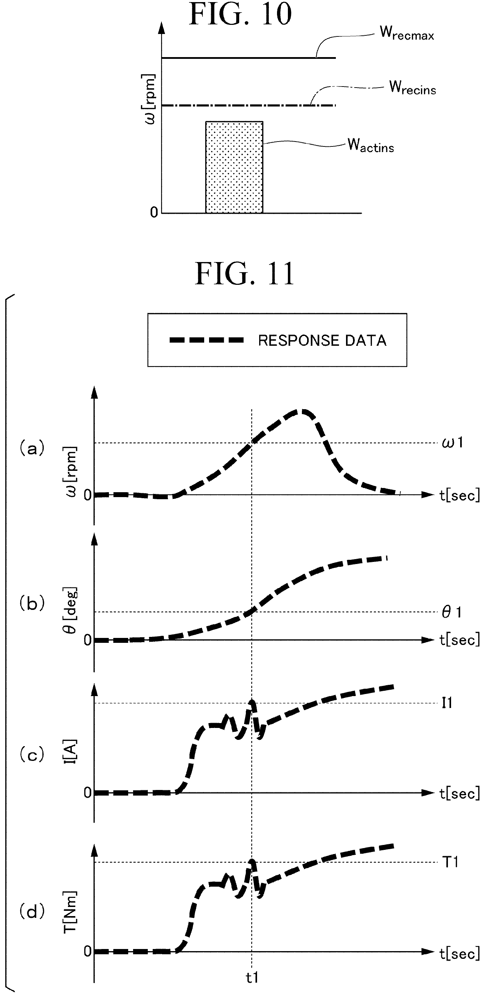

A format of displaying the recommended steering waveform Wrec and the actual steering waveform Wact on the display unit 34 is not limited to the time series graph described above. For example, a format of the display on the display unit 34 may be a bar graph, a polar coordinate graph, or a graphical format such as a diagram of a rotating handle. FIG. 10 is a diagram showing a display example of an instantaneous value of the steering waveform W on the display unit 34 according to the present embodiment. In the example of FIG. 10, an instantaneous value Wrecins of the recommended steering waveform Wrec and an instantaneous value Wactins of the actual steering waveform Wact are displayed to be superimposed on the bar graph.

Also, in the example of FIG. 10, in addition to the instantaneous values Wrecins and Wactins described above, a maximum value Wrecmax of the recommended steering waveform Wrec is displayed. As described above, the configuration in which the display unit 34 displays a representative value such as the maximum value or a minimum value of the recommended steering waveform Wrec is suitable in that the steering manipulation by the user and the recommended steering waveform Wrec are more likely to come close to each other. Note that, the display unit 34 may display the recommended steering waveform Wrec and the actual steering waveform Wact in a numerical format instead of the graphical format. Alternatively, the display unit 34 may display the recommended steering waveform Wrec and the actual steering waveform Wact in both the graphical format and the numerical format.

As described above, in the input/output device 3A according to the present embodiment, the output unit 33 outputs both the recommended steering waveform Wrec and the actual steering waveform Wact which is the actual steering waveform W. According to this configuration, it is possible for the user to easily recognize a difference between the actual steering waveform Wact and the recommended steering waveform Wrec. Therefore, the steering manipulation by the user and the recommended steering waveform Wrec are likely to come close to each other. That is, it is possible to improve reproducibility of the steering test.

Also, the input/output device 3A according to the present embodiment further includes the display unit 34 displaying output data output from the output unit 33 in a numerical format or a graphical format. With this configuration, it is possible for the user to ascertain the recommended steering waveform Wrec during the steering test. Thereby, it is easier for the user to conduct the steering test in accordance with the recommended steering waveform Wrec.

Embodiment 3.

Next, embodiment 3 will be described, but a basic configuration is the same as those of embodiment 1 and embodiment 2. Therefore, description of the same components will be omitted, and only different points will be described.

The present embodiment differs from embodiment 1 and embodiment 2 in a method of generating a recommended steering waveform Wrec when vibration is included in response data. More specifically, an input/output device 3B according to the present embodiment generates the recommended steering waveform Wrec so that it reproduces the vibration included in the response data and identification of a vibration factor is facilitated. Note that, a block diagram of the input/output device 3B is omitted because it is similar to the block diagrams of the input/output devices 3 and 3A according to the embodiments described above.

FIG. 11 is a diagram showing an example of the response data including vibration. In the example of FIG. 11, as shown in the graph (c) and graph (d), vibration is generated in a detected current I and a steering torque T in the vicinity of a time t1. If generation of vibration is not acceptable, it is necessary to eliminate the vibration. In order to eliminate the vibration, generally, the vibration factor is identified and a countermeasure is taken according to the vibration factor. However, depending on a steering waveform W (target steering waveform Wtar), it may be difficult to identify the vibration factor during a steering test, and a countermeasure to suppress the vibration may become unclear. In such a case, the input/output device 3B according to the present embodiment generates the recommended steering waveform Wrec so that it reproduces the vibration included in the response data and identification of the vibration factor is facilitated.

First, the recommended steering waveform Wrec for reproducing the vibration included in the response data will be described. In the response data shown in FIG. 11, an amplitude of the vibration is maximum at the time t1. Therefore, an operating-point extraction unit 322 according to the present embodiment extracts the response data at the time t1 as an operating point angle $\theta 1$, an operating point angular velocity $\omega 1$, an operating point detection current I1, and an operating point steering torque T1. Thereby, a recommended-steering-waveform generation unit 32 generates the recommended steering waveform Wrec including the response data at the time t1. If the steering test is conducted again on the basis of such a recommended steering waveform Wrec, there is a high likelihood that the above-described vibration will be reproduced in the response data. That is, it is possible to generate the recommended steering waveform Wrec capable of reproducing the vibration by extracting the response data at the time when the vibration is generated as an operating point and generating the recommended steering waveform Wrec so that it includes the operating point.

Note that, a method of extracting the operating point is not limited to the above-described example, that is, a method of extracting the response data at the time when an amplitude of the vibration is maximum as the operating point. The operating point may be extracted after removing a vibration component, for example, by applying a low-pass filter, a band-pass filter, or the like to the response data. According to this method, it is possible to extract the operating point even when raw values of the response data change drastically due to the generation of the vibration. Alternatively, the response data at a center time of a section in which the vibration is generated may be used as the operating point. Even with these methods, it is possible to generate the recommended steering waveform Wrec capable of reproducing the vibration.

Next, the recommended steering waveform Wrec for facilitating identification of the vibration factor will be described. As a method for identifying the vibration factor from the response data, there are the following two methods. A first method is to examine a frequency f of the vibration. A second method is a method of examining a correlation (hereinafter referred to as a "rotation synchronization correlation") between the frequency f of the vibration and the angular velocity $\omega$ of the rotary machine 1. The recommended-steering-waveform generation unit 32 according to the present embodiment generates the recommended steering waveform Wrec that makes it easy to perform both of those two methods.

First, the first method, that is, the frequency f of the vibration will be described. The frequency f of the vibration differs depending on the vibration factor. Examples of typical vibration factors include, in ascending order of the frequency f of generated vibration, a road surface reaction force due to unevenness of the road surface, instability due to an insufficient phase margin in a control system, instability due to an insufficient gain margin in the control system, and sensor noise. That is, when the frequency f of vibration in question is examined, it becomes easier to identify the vibration factor.

As a method for examining the frequency f of the vibration at each time of the response data, there is a method of processing the response data by short-time Fourier transform. The short-time Fourier transform refers to processing of extracting an amplitude of a signal at each time and each frequency component. Specifically, first, frame data is created by trimming a vibration waveform with a time width tW. A large number of such frame data are prepared by shifting the time. Fast Fourier transform (FFT) processing with a window function is performed for each frame data.

When the short-time Fourier transform as described above is performed on the response data, it is possible to extract and analyze various values. For example, it is possible to extract a time at which an amplitude of the vibration is maximum among all times and all frequency components as the vibration generation time t1. It is possible to use the vibration generation time t1 be used for defining the operating point. Also, it is possible to evaluate the amplitude (maximum amplitude) at the vibration generation time t1 as a vibration generation level. Also, it is possible to extract the frequency f of the vibration at each time point by examining a frequency component at which the vibration amplitude is maximum at each time point in the vicinity of the vibration generation time t1.

Here, a frequency resolution Δf of the short-time Fourier transform is expressed by the following expression (4).

[Math. 4]

$$\Delta f = \frac{1}{t_{\mathrm{W}}} \quad \cdots \quad (4)$$

In expression (4), tW is a time width of the short-time Fourier transform, that is, a time width of each frame data. An amplitude output by the short-time Fourier transform is calculated on the basis of the frame data trimmed with the time width tW. Therefore, if duration of the vibration to be analyzed is less than the time width tW, an amplitude of the vibration is not calculated correctly, and a calculated value of the amplitude becomes a smaller value than an actual amplitude value. This adversely affects extraction of the vibration amplitude, the vibration generation time t1, and the frequency f. Therefore, it is desirable that the duration of the vibration to be analyzed be equal to or more than the time width tW.

Then, the recommended-steering-waveform generation unit 32 according to the present embodiment generates a recommended steering waveform Wrec in which a state in the vicinity of the operating point (that is, response data at the time when vibration is generated) continues for the time width tW or more. Thereby, it is possible to improve an analysis accuracy of the amplitude and frequency f of the vibration.

Next, the second method, that is, a correlation (rotation synchronization correlation) between the frequency f of the vibration and the angular velocity ω of the rotary machine 1 will be described. In the vibration factor, there are one that causes vibration with the rotation synchronization correlation, and another one that causes vibration without the rotation synchronization correlation. Examples of the vibration factor that causes vibration with the rotation synchronization correlation include structural asymmetry, a dead time error, and the like. More specifically, the structural asymmetry means structural asymmetry related to the rotary machine 1, an angle sensor of the rotary machine 1, an inverter that drives the rotary machine 1, and components such as gears. The dead time error is an error that occurs during switching of the inverter. On the other hand, examples of the vibration factor that causes vibration without the rotation synchronization correlation include instability of the control system, a road surface reaction force due to unevenness of the road surface, sensor noise, and the like. That is, when presence or absence of the rotation synchronization correlation of vibration in question is examined, it becomes easier to identify the vibration factor.

Here, in order to determine presence or absence of the rotation synchronization correlation, the condition expressed by the following expression (5) needs to be satisfied.

[Math. 5]

$$\Delta \omega \geq \frac{\alpha \Delta f}{N_{\mathrm{min}}} \quad \cdots \quad (5)$$

In expression (5), Δω is an angular velocity variation amount, and α (≥ 1) is a determination safety factor. The determination safety factor α is a value set to prevent an erroneous determination when the rotation synchronization correlation is determined. Also, in expression (5), Nmin is a minimum value of an assumed rotation synchronization order (the number of vibrations of the vibration per rotation of the rotary machine 1). As a simple numerical example, a solution expressed by the following expression (6) is obtained provided that α = 2, Δf = 2.5 Hz, and Nmin = 1st order.

[Math. 6]

$$\Delta \omega \geq 5 \mathrm{rad/s} = 48 \mathrm{rpm} \quad \cdots \quad (6)$$

The recommended-steering-waveform generation unit 32 according to the present embodiment generates the recommended steering waveform Wrec that includes the operating point angular velocity ω1 at the time of vibration generation and is capable of securing the above-described angular velocity variation amount Δω. More specifically, the recommended steering waveform Wrec is generated to include a high angular velocity ωH and a low angular velocity ωL defined by the following expressions (7) and (8).

[Math. 7]

$$\omega_{\mathrm{H}} = \omega_1 + \beta \Delta\omega \qquad \cdots (7)$$
$$\omega_{\mathrm{L}} = \omega_1 - (1 - \beta) \Delta\omega \quad \cdots (8)$$

Here, $\omega$H-$\omega$L = $\Delta\omega$ holds true. Therefore, when the recommended steering waveform Wrec is generated to include both the high angular velocity $\omega$H and the low angular velocity $\omega$L, the recommended steering waveform Wrec in which the angular velocity variation amount $\Delta\omega$ is secured is generated. Note that, in expressions (7) and (8), $\beta$ is a value that may be arbitrarily set within a range of $0 \leq \beta \leq 1$. As an example, when $\beta = 0.5$, the following expressions (9) and (10) are obtained.

[Math. 8]

$$\omega_{\mathrm{H}} = \omega_1 + 0.5\Delta\omega \quad \cdots \quad (9)$$
$$\omega_{\mathrm{L}} = \omega_1 - 0.5\Delta\omega \quad \cdots \quad (10)$$

Further, as an example, when the operating point angular velocity $\omega$1 = 600 rpm and the angular velocity variation amount $\Delta\omega$ = 48 rpm, solutions expressed by the following expressions (11) and (12) are obtained.

[Math. 9]

$$\omega_{\mathrm{H}} = 624\mathrm{rpm} \quad \cdots \quad (11)$$
$$\omega_{\mathrm{L}} = 576\mathrm{rpm} \quad \cdots \quad (12)$$

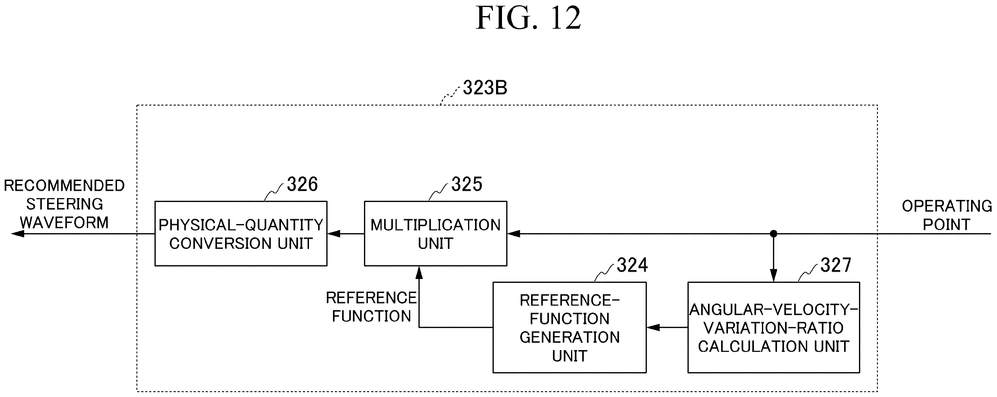

Based on the above-described points, a specific configuration for generating the recommended steering waveform Wrec that reproduces the vibration and facilitates identification of the vibration factor will be described. FIG. 12 is a block diagram showing a generation unit 323B according to the present embodiment. The generation unit 323B according to the present embodiment includes an angular-velocity-variation-ratio calculation unit 327. The operating-point extraction unit 322 outputs the extracted operating point to a multiplication unit 325 and the angular-velocity-variation-ratio calculation unit 327.

The angular-velocity-variation-ratio calculation unit 327 calculates a high angular velocity ratio $\omega$Hr (= $\omega$H/$\omega$1) and a low angular velocity ratio $\omega$Lr (= $\omega$L/$\omega$1) on the basis of the operating point angular velocity $\omega$1 output by the operating-point extraction unit 322. The angular-velocity-variation-ratio calculation unit 327 outputs the calculated high angular velocity ratio $\omega$Hr and low angular velocity ratio $\omega$Lr to a reference-function generation unit 324. The reference-function generation unit 324 transforms a reference function to include the high angular velocity ratio $\omega$Hr and the low angular velocity ratio $\omega$Lr. The reference-function generation unit 324 outputs the transformed reference function to the multiplication unit 325.

When the generation unit 323B having the configuration as described above is employed, it is possible for the recommended-steering-waveform generation unit 32 to generate the recommended steering waveform Wrec including both the high angular velocity $\omega$H and the low angular velocity $\omega$L. In other words, it is possible to generate the recommended steering waveform Wrec, in which the angular velocity variation amount $\Delta\omega$ is secured and it is possible to determine presence or absence of the rotation synchronization correlation.

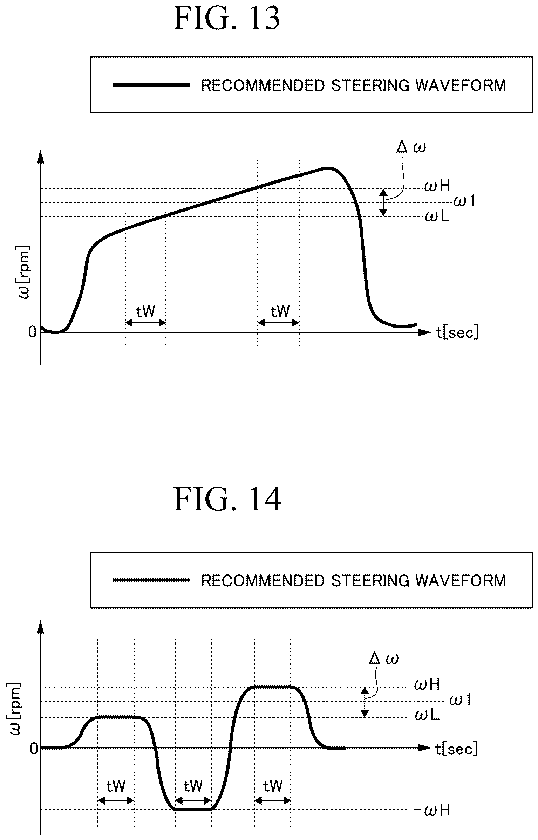

FIG. 13 is a diagram showing an example of the recommended steering waveform Wrec according to the present embodiment, which does not include reverse steering manipulation. The recommended steering waveform Wrec shown in FIG. 13 includes the high angular velocity $\omega$H and the low angular velocity $\omega$L in the vicinity of the operating point angular velocity $\omega$1. Also, an angular velocity continuing duration of the high angular velocity $\omega$H or more continues for the time width tW or more, and an angular velocity continuing duration of the low angular velocity $\omega$L or less continues for the time width tW or more.

When steering manipulation is performed according to such a recommended steering waveform Wrec, since the recommended steering waveform Wrec includes the operating point angular velocity $\omega$1, it is possible to reproduce the vibration. Also, since the angular velocity in the vicinity of the operating point angular velocity ω1 continues for the time width tW or more, it is possible to analyze the frequency f with high accuracy by using the short-time Fourier transform. Also, since the recommended steering waveform Wrec includes the angular velocity variation amount Δω, it is possible to determine the rotation synchronization correlation.

FIG. 14 is a diagram showing an example of the recommended steering waveform Wrec according to the present embodiment, which includes reverse steering manipulation. In the recommended steering waveform Wrec shown in FIG. 14, angular velocity continuing durations of the high angular velocity ωH and the low angular velocity ωL in the vicinity of the operating point angular velocity ω1 each continue for the time width tW or more. Even with such a recommended steering waveform Wrec, it is possible to reproduce the vibration, analyze the frequency f with high accuracy, and determine the rotation synchronization correlation similarly to the example of FIG. 13.

Here, the recommended steering waveform Wrec shown in FIG. 14 includes certain periods of time in which the angular velocity ω is the high angular velocity ωH and the low angular velocity ωL. Therefore, the steering manipulation and the analysis are easier than, for example, those of the recommended steering waveform Wrec shown in FIG. 13. Also, since the recommended steering waveform Wrec includes switching steering manipulation, an amount of maximum displacement of an angle θ is smaller than that of the recommended steering waveform Wrec that does not include the reverse steering manipulation. Thereby, even if the operating point angular velocity ω1 is large, it is possible to reduce a possibility that a rotation angle of the steering exceeds a range of movement. Note that, it is also possible to determine the rotation synchronization correlation using a period of the recommended steering waveform Wrec in which the angular velocity ω is negative (for example, a period in which it is -ωH). However, since rotation directions are different, there is a likelihood that the vibration to be analyzed (reproduced and analyzed) will not be generated. Therefore, it is desirable to generate the recommended steering waveform Wrec so that the high angular velocity ωH and the low angular velocity ωL are included with the same sign.

Note that, in the present embodiment, the angular-velocity-variation-ratio calculation unit 327 is used to transform the reference function on the basis of the operating point angular velocity ω1, but a configuration of the generation unit 323B is not limited thereto. If it is possible to define in advance a waveform shape of the reference function that is capable of sufficiently securing Δω without depending on the operating point angular velocity ω1, the generation unit 323B may not need to have the angular-velocity-variation-ratio calculation unit 327. In this case, the configuration of the generation unit 323B according to the present embodiment may be the same as the configuration of the generation unit 323 in embodiment 1 and embodiment 2.

As described above, in the input/output device 3B according to the present embodiment, when the response data including vibration to be analyzed is input, the recommended-steering-waveform generation unit 32 generates the recommended steering waveform Wrec including a value of the response data at the time when the vibration is generated. According to this configuration, it is possible to generate the recommended steering waveform Wrec that easily reproduces the vibration to be analyzed. Therefore, it is possible to improve an efficiency of vibration verification.

Also, when the response data including vibration to be analyzed is input, the recommended-steering-waveform generation unit 32 generates the recommended steering waveform Wrec in which the response data at the time when the vibration is generated continues for a duration equal to or more than a length required to analyze the frequency f and amplitude of the vibration. With this configuration, it becomes easier to analyze the frequency f and amplitude of the vibration using a method such as short-time Fourier transform. Thereby, it is easier to identify the vibration factor.

Also, when the response data including vibration to be analyzed is input, the recommended-steering-waveform generation unit 32 generates the recommended steering waveform Wrec that includes the angular velocity variation amount Δω necessary for determining presence or absence of the correlation between the frequency f of the vibration and the angular velocity ω of the rotary machine 1. With this configuration, it is easier to examine the correlation between the frequency f of the vibration and the angular velocity ω. Thereby, it is easier to identify the vibration factor.

Although embodiments 1 to 3 have been described above, the present disclosure is not limited to the above-described embodiments, and may be freely modified within a range not departing from the spirit of the present disclosure. Also, embodiments 1 to 3 described above may be combined as appropriate.

Note that, each configuration of the input/output devices 3, 3A, and 3B, and the steering measurement device 200 described above has a computer system therein. Then, a program for realizing functions of each configuration of the input/output devices 3, 3A, and 3B, and the steering measurement device 200 described above may be recorded on a computer-readable recording medium, and the processing in each configuration of the input/output devices 3, 3A and 3B, and the steering measurement device 200 described above may be performed by causing the computer system to read and execute the program recorded on the recording medium. Here, "causing the computer system to read and execute the program recorded on the recording medium" includes installing the program on the computer system. The "computer system" described herein includes an OS and hardware such as peripheral devices.

Also, the "computer system" may include a plurality of computer devices connected via a network including the Internet or a communication line such as a WAN, LAN, or dedicated line. Also, the "computer-readable recording medium" refers to a portable medium such as a flexible disk, a magneto-optical disk, a ROM, and a CD-ROM, and a storage device such as a hard disk built in a computer system. In this way, the recording medium in which the program is stored may be a non-transitory recording medium such as a CD-ROM.

[Reference Signs List]

100 Electric power steering device
200 Steering measurement device
1 Rotary machine
2 Control device
3, 3A, 3B Input/output device
31 Communication receiving unit
32 Recommended-steering-waveform generation unit
33 Output unit

**Claims**

1. An input/output device comprising:

   a communication receiving unit connected to a control device controlling a rotary machine of an electric power steering device and receiving response data of the electric power steering device, which is detected during steering manipulation based on a target steering waveform which is a target value of a steering waveform representing a temporal change in the steering manipulation, from the control device;
   a recommended-steering-waveform generation unit generating a recommended steering waveform, which is recommended as the target steering waveform, on the basis of the response data; and
   an output unit outputting the recommended steering waveform.

2. The input/output device according to claim 1, wherein the response data includes at least one of a steering torque value of a steering of the electric power steering device, a detected current value of the rotary machine, an angle value of the rotary machine, and an angular velocity value of the rotary machine.

3. The input/output device according to claim 1 or 2, wherein the recommended-steering-waveform generation unit generates the recommended steering waveform so that it includes an operating point extracted from the response data and representing characteristics of the steering manipulation.

4. The input/output device according to any one of claims 1 to 3, wherein the output unit outputs both the recommended steering waveform and an actual steering waveform which is an actual one of the steering waveforms.

5. The input/output device according to any one of claims 1 to 4, further comprising a display unit displaying output data output from the output unit in a numerical format or a graphical format.

6. The input/output device according to any one of claims 1 to 5, wherein when the response data including vibration to be analyzed is input, the recommended-steering-waveform generation unit generates the recommended steering waveform including a value of the response data at the time when the vibration is generated.

7. The input/output device according to any one of claims 1 to 6, wherein when the response data including vibration to be analyzed is input, the recommended-steering-waveform generation unit generates the recommended steering waveform in which the response data at the time when the vibration is generated continues for a duration equal to or more than a length required to analyze a frequency and amplitude of the vibration.

8. The input/output device according to any one of claims 1 to 7, wherein when the response data including vibration to be analyzed is input, the recommended-steering-waveform generation unit generates the recommended steering waveform that includes an angular velocity variation amount necessary for determining presence or absence of a correlation between a frequency of the vibration and an angular velocity of the rotary machine.

9. A steering measurement device comprising:

the input/output device according to any one of claims 1 to 8; and

the control device, wherein

when the steering is steered, the control device transmits a detected response of the electric power steering device to the input/output device as the response data.

FIG. 1

EP 4 516 636 A1

FIG. 2

EP 4 516 636 A1

# FIG. 3

# FIG. 4

RECOMMENDED STEERING WAVEFORM ← [GENERATION UNIT 323] ← OPERATING POINT ← [OPERATING-POINT EXTRACTION UNIT 322] ← RESPONSE DATA ← [STORAGE/REPRODUCTION UNIT 321] ← RESPONSE DATA

32

# FIG. 5

# FIG. 6

RECOMMENDED
STEERING WAVEFORM

326
PHYSICAL-QUANTITY
CONVERSION UNIT

325
MULTIPLICATION
UNIT

323

OPERATING
POINT

REFERENCE
FUNCTION

324
REFERENCE-
FUNCTION
GENERATION
UNIT

EP 4 516 636 A1

# FIG. 7

RECOMMENDED STEERING WAVEFORM

(a)

$\theta$ [deg]

$\theta 1$

0 t[sec]

(b)

$\omega$[rpm]

$\omega 1$

0 t[sec]

$-\omega 1$

# FIG. 8

# FIG. 9

# FIG. 10

# FIG. 11

# FIG. 12

EP 4 516 636 A1

# FIG. 13

| RECOMMENDED STEERING WAVEFORM |
| --- |

# FIG. 14

| RECOMMENDED STEERING WAVEFORM |
| --- |

<div style="text-align:center">

**INTERNATIONAL SEARCH REPORT**

</div>

| International application No. |
| --- |
| **PCT/JP2022/019028** |

| A. | CLASSIFICATION OF SUBJECT MATTER |
| --- | --- |

*B62D 5/04*(2006.01)i; *G01M 17/06*(2006.01)i
FI:   G01M17/06; B62D5/04

According to International Patent Classification (IPC) or to both national classification and IPC

| B. | FIELDS SEARCHED |
| --- | --- |

Minimum documentation searched (classification system followed by classification symbols)

B62D5/04; G01M17/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2008/053816 A1 (NSK LTD) 08 May 2008 (2008-05-08)<br>entire text, all drawings | 1-9 |
| A | WO 2019/074087 A1 (NSK LTD) 18 April 2019 (2019-04-18)<br>entire text, all drawings | 1-9 |
| A | JP 2006-145517 A (TOYOTA MOTOR CORP) 08 June 2006 (2006-06-08)<br>entire text, all drawings | 1-9 |
| A | JP 2021-165062 A (SUBARU CORP) 14 October 2021 (2021-10-14)<br>entire text, all drawings | 1-9 |
| A | JP 2007-237848 A (MITSUBISHI ELECTRIC CORP) 20 September 2007 (2007-09-20)<br>entire text, all drawings | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 June 2022** | **26 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/019028**

| Patent document cited in search report | | | Publication date (day/month/year) | Patent family member(s) | | | Publication date (day/month/year) |
|---|---|---|---|---|---|---|---|
| WO | 2008/053816 | A1 | 08 May 2008 | US entire text, all drawings | 2010/0017064 | A1 | |
| WO | 2019/074087 | A1 | 18 April 2019 | US entire text, all drawings | 2020/0231206 | A1 | |
| JP | 2006-145517 | A | 08 June 2006 | (Family: none) | | | |
| JP | 2021-165062 | A | 14 October 2021 | US entire text, all drawings | 2021/0309288 | A1 | |
| JP | 2007-237848 | A | 20 September 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6129409 B